# EUROPÄISCHE PATENTSCHRIFT

(11) **EP 4 342 074 B1**
(45) Veröffentlichungstag und Bekanntmachung des Hinweises auf die Patenterteilung: **26.08.2026**
(21) Anmeldenummer: 22729470.9
(22) Anmeldetag: 12.05.2022
(51) Int. Cl.: H02P 29/66, H02P 21/14, H02P 21/13, H02P 21/24, H02P 29/60

(54) **VERFAHREN UND VORRICHTUNG ZUM SCHÄTZEN EINER ROTORTEMPERATUR EINES ROTORS EINER ELEKTRISCHEN MASCHINE**
METHOD AND DEVICE FOR ESTIMATING A ROTOR TEMPERATURE OF A ROTOR OF AN ELECTRIC MACHINE
PROCÉDÉ ET DISPOSITIF D'ESTIMATION D'UNE TEMPÉRATURE DE ROTOR D'UN ROTOR D'UNE MACHINE ÉLECTRIQUE

(30) Priorität: 19.05.2021 DE 102021205114
(43) Veröffentlichungstag der Anmeldung: 27.03.2024
(73) Patentinhaber: VOLKSWAGEN AKTIENGESELLSCHAFT, 38440 Wolfsburg (DE)
(72) Erfinder: WEBER, Bastian, 30161 Hannover (DE)
(86) Internationale Anmeldenummer: PCT/EP2022/062965
(87) Internationale Veröffentlichungsnummer: WO 2022/243175

(56) Entgegenhaltungen:
- EP-A1- 2 894 784
- DE-A1- 102015 005 555
- WEBER BASTIAN ET AL: "Compensation of switching dead-time effects in voltage-fed PWM inverters using FPGA-based current oversampling", 2016 IEEE APPLIED POWER ELECTRONICS CONFERENCE AND EXPOSITION (APEC), IEEE, 20 March 2016 (2016-03-20), pages 3172 - 3179, XP032899230, ISBN: 978-1-4673-8393-6, [retrieved on 20160510], DOI: 10.1109/APEC.2016.7468318
- MARTIN GANCHEV ET AL: "Sensorless rotor temperature estimation of permanent magnet synchronous motor under load conditions", IECON 2012 - 38TH ANNUAL CONFERENCE ON IEEE INDUSTRIAL ELECTRONICS SOCIETY, IEEE, 25 October 2012 (2012-10-25), pages 1999 - 2004, XP032281243, ISBN: 978-1-4673-2419-9, DOI: 10.1109/IECON.2012.6388895

## Beschreibung

Die Erfindung betrifft ein Verfahren und eine Vorrichtung zum Schätzen einer Rotortemperatur eines Rotors einer elektrischen Maschine.

Im Gegensatz zu Verbrennungskraftmaschinen zeichnen sich elektrische Antriebssysteme durch einen deutlich größeren Wirkungsgrad aus, was maßgeblich zum Erfolg der Elektromobilität beiträgt. Eine Kenntnis der Betriebseigenschaften, insbesondere einer Rotortemperatur, eines elektrischen Antriebssystems erlaubt Vorhersagen in Bezug auf die Alterung des Systems. Es können aber auch die Betriebsgrenzen des Systems hinsichtlich einer möglichen Dauerleistung sowie einer Überlastfähigkeit höher ausgelastet werden. Im Ergebnis resultieren daraus für die Traktionseigenschaften von elektrifizierten Fahrzeugen entscheidende Vorteile. Eine Messung der Rotortemperatur mittels eines Sensors gestaltet sich jedoch aufgrund von großen Drehzahlen von elektrischen Maschinen in Traktionsantrieben äußerst schwierig und kostspielig.

Aus M. Ganchev, C. Kral und T. Wolbank, Hardware and software implementation of sensorless rotor temperature estimation technique for Permanent Magnet Synchronous Motor, 2012 Electrical Systems for Aircraft, Railway and Ship Propulsion, 2012, S. 1-6, doi: 10.1109/ESARS.2012.6387420, ist ein Verfahren zum sensorlosen Schätzen einer Rotortemperatur bekannt. Hierbei wird das Schätzen durchgeführt, während ein q-Strom auf Null geregelt ist.

Aus B. Weber, T. Brandt and A. Mertens, Compensation of switching dead-time effects in voltage-fed PWM inverters using FPGA-based current oversampling, 2016 IEEE Applied Power Electronics Conference and Exposition (APEC), Long Beach, CA, USA, 2016, S. 3172-3179, doi: 10.1109/APEC.2016.7468318, ist ein Verfahren zur Totzeitkompensation bekannt.

Aus Bastian Weber, Positionsgeberlose Regelung von permanentmagneterregten Synchronmaschinen bei kleinen Drehzahlen mit überabtastender Stromerfassung, Hannover, Gottfried Wilhelm Leibniz Universität Hannover, Dissertation, 2018, 163 S., https://doi.org/10.15488/9140, ist ein Verfahren zum Schätzen einer Rotorlage und/oder einer Rotordrehzahl bekannt.

Die DE 10 2015 005 555 A1 beschreibt ein Verfahren zur Bestimmung einer Magnettemperatur einer permanent erregten elektrischen Maschine, wobei einer Magnettemperaturbeobachtereinheit zumindest ein gemessener Statorstrom der Maschine, eine in einem Umrichter der Maschine gebildete Statorspannung und eine gemessene Drehzahl der Maschine zugeführt werden, wobei eine Erfassung der Statorspannung über eine Laufzeit anhand eines Modells der elektrischen Maschine erfolgt, wobei mittels der Magnettemperaturbeobachtereinheit aus den zugeführten Daten und unter Berücksichtigung einer Vorlauftemperatur eines Kühlmediums der Maschine ein Permanentmagnetfluss ermittelt wird und mittels der Magnettemperaturbeobachtereinheit aus einer Flussdifferenz zwischen dem Permanentmagnetfluss und einem einer Referenzmagnettemperatur zugeordneten und in dem Modell in zumindest einem Kennfeld hinterlegten Referenzfluss eine Temperaturdifferenz und aus dieser die Magnettemperatur ermittelt wird, wobei zur Erzeugung des zumindest einen Kennfelds frequenzabhängige Einflüsse auf die Maschine offline bestimmt werden und in dem zumindest einen Kennfeld abgebildet werden.

Die EP 2 894 784 B1 beschreibt ein Magnettemperatur-Schätzsystem für einen Synchronelektromotor mit einem Permanentmagneten, dieser umfasst eine Überlagerungseinheit, die dazu konfiguriert ist, eine Spannung oder einen Strom mit einer Frequenz zu überlagern, die sich von der Frequenz einer den Synchronelektromotor antreibenden Grundwelle unterscheidet, auf mindestens einer d-Achse des Synchronelektromotors; einen Rechner, der dazu konfiguriert ist, eine Impedanz des Synchronelektromotors aus der überlagerten Spannung oder dem überlagerten Strom und einem durch die Überlagerung erhaltenen Strom oder einer Spannung zu berechnen; und eine Magnettemperatur-Schätzeinheit, die dazu konfiguriert ist, eine Temperatur des Permanentmagneten auf der Grundlage der berechneten Impedanz zu schätzen.

M. Ganchev, C. Kral, T. Wolbank, Sensorless rotor temperature estimation of permanent magnet synchronous motor under load conditions, Annual Conference of the IEEE Industrial Electronics Society, 2012, DOI:10.1109/IECON.2012.6388895, beschreibt ein Verfahren zur Rotortemperaturschätzung.

Der Erfindung liegt die Aufgabe zu Grunde, ein Verfahren und eine Vorrichtung zum Schätzen einer Rotortemperatur eines Rotors einer elektrischen Maschine zu schaffen, mit denen eine Rotortemperatur verbessert geschätzt werden kann.

Die Aufgabe wird erfindungsgemäß durch ein Verfahren mit den Merkmalen des Patentanspruchs 1 und eine Vorrichtung mit den Merkmalen des Patentanspruchs 6 gelöst. Vorteilhafte Ausgestaltungen der Erfindung ergeben sich aus den Unteransprüchen.

Insbesondere wird ein Verfahren zum Schätzen einer Rotortemperatur eines Rotors einer elektrischen Maschine zur Verfügung gestellt, wobei Strangströme der elektrischen Maschine hochfrequent erfasst werden, wobei unter Berücksichtigung einer Totzeitkompensation zugehörige Strangspannungen bestimmt werden, wobei eine Rotorlage der elektrischen Maschine erfasst oder geschätzt wird, wobei ausgehend von den hochfrequent erfassten Strangströmen, den bestimmten Strangspannungen und der erfassten oder geschätzten Rotorlage ein von der Flussverkettung des Rotors hervorgerufener Spannungsanteil von Statorspannungen bestimmt wird, wobei die Flussverkettung des Rotors ausgehend von dem bestimmten Spannungsanteil bestimmt wird, und wobei die Rotortemperatur der elektrischen Maschine ausgehend von einer bekannten Abhängigkeit der Rotortemperatur von der Flussverkettung des Rotors geschätzt und bereitgestellt wird.

Ferner wird insbesondere eine Vorrichtung zum Schätzen einer Rotortemperatur eines Rotors einer elektrischen Maschine geschaffen, umfassend eine Steuereinrichtung, wobei die Steuereinrichtung dazu eingerichtet ist, hochfrequent erfasste Strangströme zu empfangen, unter Berücksichtigung einer Totzeitkompensation zugehörige Strangspannungen zu bestimmen, eine erfasste oder geschätzte Rotorlage der elektrischen Maschine zu empfangen, ausgehend von den hochfrequent erfassten Strangströmen, den bestimmten Strangspannungen und der erfassten oder geschätzten Rotorlage einen von der Flussverkettung des Rotors hervorgerufenen Spannungsanteil von Statorspannungen zu bestimmen, die Flussverkettung des Rotors ausgehend von dem bestimmten Spannungsanteil zu bestimmen, und die Rotortemperatur der elektrischen Maschine ausgehend von einer bekannten Abhängigkeit der Rotortemperatur von der Flussverkettung des Rotors zu schätzen und bereitzustellen.

Das Verfahren und die Vorrichtung ermöglichen es, eine Rotortemperatur eines Rotors auch bei einem q-Strom von größer Null, das heißt, bei einem normalen Betrieb der elektrischen Maschine, zu schätzen. Eine Rotortemperatur kann hierdurch auch dann geschätzt werden, wenn ein Drehmoment von der elektrischen Maschine angefordert wird. Eine drehmomentbildende Stromregelung muss daher zum Zweck des Bestimmens der Rotortemperatur nicht unterbrochen werden. Da eine Unterbrechung nicht erfolgen muss, weist ein mittels der elektrischen Maschine ausgebildeter Antrieb im Gegensatz zu Systemen, bei denen zum Bestimmen der Rotortemperatur eine Unterbrechung des drehmomentbildenden Stromes (q-Strom) notwendig ist, den Vorteil einer größeren Drehmomentdynamik auf.

Der Vorteil wird insbesondere durch ein hochfrequentes Erfassen der Strangströme und eine Totzeitkompensation erreicht. Insbesondere werden die Strangströme der elektrischen Maschine fortlaufend hochfrequent erfasst. Das hochfrequente Erfassen der Strangströme bedeutet, dass diese überabgetastet erfasst werden. Insbesondere bedeutet dies, dass eine Frequenz der Abtastung deutlich größer ist als eine Modulationsfrequenz eines Pulswechselrichters, der zum Speisen der elektrischen Maschine verwendet wird, insbesondere um einen Faktor 10, 100 oder 1000 größer. Unter Berücksichtigung einer Totzeitkompensation werden zugehörige Strangspannungen bestimmt. Hierdurch stehen sowohl aktuelle Werte für die Strangströme als auch für jeweils zugehörige Strangspannungen zur Verfügung. Eine Rotorlage der elektrischen Maschine wird erfasst oder geschätzt. Ausgehend von den hochfrequent erfassten Strangströmen, den bestimmten zugehörigen Strangspannungen und der erfassten oder geschätzten Rotorlage wird ein von der Flussverkettung des Rotors hervorgerufener Spannungsanteil der Statorspannungen bestimmt. Die Flussverkettung des Rotors wird ausgehend von dem bestimmten Spannungsanteil bestimmt und die Rotortemperatur der elektrischen Maschine wird ausgehend von einer bekannten Abhängigkeit der Rotortemperatur von der Flussverkettung des Rotors geschätzt und bereitgestellt. Das Bereitstellen kann beispielsweise ein Erzeugen und Ausgeben eines analogen oder digitalen Rotortemperatursignals umfassen.

Die Strangströme werden insbesondere mittels einer hierfür geeigneten Sensorik, insbesondere mittels Stromsensoren an den einzelnen Strängen, erfasst und bereitgestellt. Die hochaufgelöst erfassten Strangströme können insbesondere dazu verwendet werden, zu einer mittensynchronen Abtastung äquivalente Werte der Strangströme zu erzeugen. Durch das hochaufgelöste Erfassen kann insbesondere ein Rauschen verbessert in den äquivalenten Werten herausgefiltert werden, sodass insbesondere ein Signal-zu-Rauschverhältnis verbessert werden kann.

Die Strangspannungen können insbesondere ausgehend von den erfassten Strangströmen und einer Modulationsansteuerung des Pulswechselrichters bestimmt werden. Hierbei ist vorgesehen, dass eine Totzeitkompensation erfolgt, welche weiter unten noch näher beschrieben wird.

Eine Rotorlage eines Rotors ist insbesondere ein Rotorlagewinkel des Rotors. Eine Rotorlage kann beispielsweise mittels einer entsprechenden Sensorik, beispielsweise mittels eines Drehgebers, erfasst und bereitgestellt werden.

Die Steuereinrichtung kann einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) oder feldprogrammierbares Gatterfeld (FPGA) ausgebildet sind.

Es ist hierbei insbesondere vorgesehen, dass die hochfrequent erfassten, insbesondere überabgetasteten, Strangströme und gegebenenfalls auch andere Größen mittels eines feldprogrammierbaren Gatterfeldes (FPGA) ausgewertet werden. Ein feldprogrammierbares Gatterfeld ermöglicht eine hochfrequente Signalerfassung und Signalverarbeitung. Hochfrequent soll hierbei insbesondere bedeuten, dass ein zugehöriger Frequenzbereich oberhalb einer Modulationsfrequenz einer Pulsdauermodulation des Pulswechselrichters liegt. Insbesondere bezeichnet hochfrequent eine um einen Faktor 10, bevorzugt um einen Faktor 100, besonders bevorzugt um einen Faktor 1000 größere Frequenz im Vergleich zu der Modulationsfrequenz. Ist eine Modulationsfrequenz beispielsweise 20 kHz, so ist eine Frequenz der Signalerfassung und Signalverarbeitung des feldprogrammierbaren Gatterfeldes beispielsweise 1 MHz. Durch die parallele Signalverarbeitung eines feldprogrammierbaren Gatterfeldes kann dieses mit Vorteil hochfrequent (insbesondere ~MHz) abgetastete Größen verarbeiten. Durch die hochfrequente Abtastung lassen sich Abtast- bzw. Aliasing-Effekte als Störgrößen im Signal reduzieren. Eventuelle Rauschanteile der Sensorik können im feldprogrammierbaren Gatterfeld digital gefiltert werden, sodass ein sehr großes Signal-zu-Rausch-Verhältnis für die digitale Weiterverarbeitung bereitgestellt werden kann. Im Vergleich dazu ist ein Mikrocontroller (z.B. DSP) deutlich weniger geeignet, um hochfrequente Signale zu verarbeiten, da die erfassten Werte des DSP jeweils vom erfassenden internen Analog-Digital-Wandler (ADC) zum Prozessorkern transportiert und verarbeitet werden müssen, was zu signallaufzeitbedingten und vorverarbeitungsbedingten Verzögerungen beim Auswerten führt. Bei einem feldprogrammierbaren Gatterfeld stehen die erfassten Werte des ADC den Logikeinheiten stattdessen unmittelbar, das heißt in Echtzeit, zur Verfügung. Auch können mit feldprogrammierbaren Gatterfeldern kostengünstige ADCs ohne weitere Maßnahmen ausgewertet werden, welche einen hochfrequenten digitalen Datenstrom (Bitstrom) erzeugen können, z.B. Delta-Sigma Wandler. Das feldprogrammierbare Gatterfeld ist insbesondere Teil eines System-on-Chip (SoC).

Das feldprogrammierbare Gatterfeld kann insbesondere ein zur Laufzeit partiell (d.h. teilweise) umkonfigurierbares feldprogrammierbares Gatterfeld sein. Hierdurch ist das feldprogrammierbare Gatterfeld insbesondere updatefähig. Das Umkonfigurieren erfolgt insbesondere im Wege der partiellen Umkonfiguration, bei der nur ein Teil des Gatterfeldes zur Laufzeit umkonfiguriert bzw. umprogrammiert wird, andere Teile des Gatterfeldes jedoch ihre jeweilige Konfiguration bzw. Programmierung beibehalten. Das Umkonfigurieren wird insbesondere mittels einer Konfigurationssteuerung durchgeführt, welche das Umkonfigurieren durchführt und überwacht. Die Konfigurationssteuerung kann mittels eines DSPs oder der Steuereinrichtung der Vorrichtung bereitgestellt werden. Zum Umkonfigurieren des mindestens einen feldprogrammierbaren Gatterfelds können insbesondere Verfahren zur automatischen Codegenerierung eingesetzt werden, wie beispielsweise der "Xilinx System Generator for DSP", welcher sowohl eine Quellcode-Modellierung als auch eine Funktionsanalyse automatisiert durchführen kann. Der "System Generator for DSP" ermöglicht beispielsweise die Modellierung von FPGA-Funktionen in einer Matlab Simulink-Umgebung, sodass die Eigenschaften gegenüber weiteren Simulink-Funktionsblöcken getestet werden können. Durch die automatische Codegenerierung kann sichergestellt werden, dass sich das feldprogrammierbare Gatterfeld identisch zur Simulink-Modellierung verhält. Eine Konfiguration eines feldprogrammierbaren Gatterfeldes umfasst insbesondere Anweisungen, mit denen das feldprogrammierbare Gatterfeld derart programmiert werden kann, dass mittels des programmierten (bzw. konfigurierten oder umkonfigurierten) Teils des feldprogrammierbaren Gatterfeldes eine bestimmte Funktionalität zur Datenverarbeitung bereitgestellt werden kann. Vorliegend ist eine solche Funktionalität insbesondere das Durchführen von Maßnahmen des in dieser Offenbarung beschriebenen Verfahrens.

Es ist vorgesehen, dass in dem Pulswechselrichter aufgrund von Schaltverzugszeiten auftretende Totzeiteffekte mittels einer Totzeitkompensation kompensiert werden. Dies erfolgt insbesondere mittels der Steuereinrichtung, insbesondere mittels mindestens eines feldprogrammierbaren Gatterfeldes der Steuereinrichtung. Die Totzeitkompensation versucht, einen Totzeiteffekt zu kompensieren. Der Totzeiteffekt tritt auf, weil es aufgrund von Schaltzeiten von Leistungshalbleitern des Pulswechselrichters zu einem Abbildungsfehler zwischen einer geschätzten aktuellen Spannung und einer realen Spannung kommt. Zum Kompensieren des Totzeiteffekts werden Schaltflanken von Leistungshalbleitern angepasst, das heißt, hinsichtlich eines Schaltzeitpunkts verschoben. Hierdurch können tatsächlich vorliegende aktuelle Strangspannungen unter Berücksichtigung von den hochfrequent erfassten Strangströmen präzise bestimmt, insbesondere geschätzt werden. Die Totzeitkompensation wird beispielsweise mittels des in B. Weber, T. Brandt and A. Mertens, Compensation of switching dead-time effects in voltage-fed PWM inverters using FPGA-based current oversampling, 2016 IEEE Applied Power Electronics Conference and Exposition (APEC), Long Beach, CA, USA, 2016, S. 3172-3179, doi: 10.1109/APEC.2016.7468318, beschriebenen Verfahrens durchgeführt.

Das Vorgehen zum Bestimmen der Rotortemperatur kann anhand der Stator-Spannungsdifferentialgleichung einer permanentmagneterregten Synchronmaschine verdeutlicht werden. Bei Asynchronmaschinen ist das Vorgehen grundsätzlich aber analog.

Die permanentmagneterregte Synchronmaschine lässt sich durch nachfolgende Statorspannungs-Differentialgleichungen in statorfesten αβ-Koordinaten modellieren: $\left(\begin{matrix}{u}_{α} \\ {u}_{β}\end{matrix}\right) = R ⋅ \left(\begin{matrix}{i}_{α} \\ {i}_{β}\end{matrix}\right) + \frac{d}{dt} \left(\left(ΣL\left(\begin{matrix}1 & 0 \\ 0 & 1\end{matrix}\right)+ΔL\left(\begin{matrix}cos \left(2{γ}_{el}\right) & sin \left(2{γ}_{el}\right) \\ sin \left(2{γ}_{el}\right) & - cos \left(2{γ}_{el}\right)\end{matrix}\right)\right)⋅\left(\begin{matrix}{i}_{α} \\ {i}_{β}\end{matrix}\right)\right) + \frac{d}{dt} {ψ}_{PM} \left(\begin{matrix}cos \left(2{γ}_{el}\right) \\ sin \left(2{γ}_{el}\right)\end{matrix}\right)$

Hierbei sind: $Σ L = \frac{{L}_{d} + {L}_{q}}{2} und Δ L = \frac{{L}_{d} - {L}_{q}}{2} ,$
- *L_{d}* die Induktivität der elektrischen Maschine in Bezug auf die d-Achse des Rotors (engl. direct axis),
- *L_{q}* die Induktivität der elektrischen Maschine in Bezug auf die q-Achse des Rotors (engl. quadrature axis),
- R der Strangwiderstand der elektrischen Maschine,
- *ψ_{PM}* die Flussverkettung des Rotors auf Grund der Permanentmagnete,
- *γₑₗ* die elektrische Rotorlage (d.h. der elektrische Rotorlagewinkel),
- *u_{α}, u_{β}* die Statorspannungen in statorfesten αβ-Koordinaten und
- *i_{α}, i_{β}* die Statorströme in statorfesten αβ-Koordinaten.

Die Strangspannungen und die Strangströme lassen sich in die Statorspannungen und Statorströme in αβ-Koordinaten umrechnen.

Die Induktivitätswerte *L_{d}* und *L_{q}* sind nahezu nicht temperaturabhängig und können, beispielweise vor Anwendung des Verfahrens, vermessen werden bzw. sind für eine Baureihe eines Maschinentyps der elektrischen Maschine bekannt. Temperaturabhängig sind vor allem der Strangwiderstand R sowie die Flussverkettung *ψ_{PM}.* In der Regel erhöht sich R mit der Temperatur und *ψ_{PM}* nimmt mit der Temperatur ab.

Grundsätzlich geht es bei dem in dieser Offenbarung beschriebenen Verfahren darum, einen ohmsch-induktiven Spannungsanteil der Statorspannungen: $R ⋅ \left(\begin{matrix}{i}_{α} \\ {i}_{β}\end{matrix}\right) + \frac{d}{dt} \left(\left(ΣL\left(\begin{matrix}1 & 0 \\ 0 & 1\end{matrix}\right)+ΔL\left(\begin{matrix}cos \left(2{γ}_{el}\right) & sin \left(2{γ}_{el}\right) \\ sin \left(2{γ}_{el}\right) & - cos \left(2{γ}_{el}\right)\end{matrix}\right)\right)⋅\left(\begin{matrix}{i}_{α} \\ {i}_{β}\end{matrix}\right)\right)$ von einem Spannungsanteil des Rotors, der durch die Flussverkettung hervorgerufen wird, zu separieren: $\frac{d}{dt} {ψ}_{PM} \left(\begin{matrix}cos \left(2{γ}_{el}\right) \\ sin \left(2{γ}_{el}\right)\end{matrix}\right)$

Dies erfolgt ausgehend von den hochfrequent erfassten Strangströmen, den bestimmten Strangspannungen und der erfassten oder geschätzten Rotorlage.

Das Verfahren und die Vorrichtung können beispielsweise in einem Kraftfahrzeug eingesetzt werden, insbesondere in einem Elektrofahrzeug oder einem Hybridfahrzeug. Grundsätzlich können das Verfahren und die Vorrichtung aber auch in anderen Gebieten eingesetzt werden, insbesondere auch in anderen Land-, Schienen-, Wasser-, Luft- oder Raumfahrzeugen, wie beispielsweise in Drohnen oder Lufttaxis.

In einer nicht beanspruchten Ausführungsform ist vorgesehen, dass eine Statortemperatur mittels mindestens eines Temperatursensors erfasst wird, wobei ausgehend von der erfassten Statortemperatur ein Strangwiderstand der elektrischen Maschine geschätzt wird, wobei zum Bestimmen der Flussverkettung die Flussverkettung unter Berücksichtigung des geschätzten Strangwiderstands mittels eines Beobachters geschätzt wird. Der Strangwiderstand der elektrischen Maschine wird hierbei beispielsweise mittels einer Kennlinie geschätzt, in der Werte der Statortemperatur jeweils mit Werten des Strangwiderstands verknüpft sind. Eine solche Kennlinie kann beispielsweise empirisch bestimmt werden und/oder durch Simulation. Ist der Strangwiderstand bekannt, so kann mit bekannten Induktivitäten der elektrischen Maschine, die beispielsweise vorab vermessen wurden, mittels eines Beobachters die Flussverkettung geschätzt werden. Insbesondere kann mittels des Beobachters ein zeitlicher Verlauf der Flussverkettung als Zustandsgröße geschätzt werden. Ein Beobachter ist insbesondere ein regelungstechnischer Beobachter (engl. state observer), der ausgehend von einem Modell der elektrischen Maschine einen Zustand der elektrischen Maschine schätzt. Der geschätzte Zustand der elektrischen Maschine wird mit einem Istzustand der elektrischen Maschine verglichen und bei Abweichungen wird mindestens ein Parameter des Modells so lange angepasst, bis der geschätzte Zustand und der Istzustand wieder übereinstimmen. Der angepasste Parameter ist vorliegend insbesondere die Flussverkettung. Die Rotortemperatur der elektrischen Maschine wird dann ausgehend von der bekannten Abhängigkeit der Rotortemperatur von der Flussverkettung des Rotors geschätzt und bereitgestellt.

Es kann vorgesehen sein, dass aus der geschätzten Rotortemperatur eine gemittelte Rotortemperatur bestimmt und bereitgestellt wird. Hierdurch können Schwankungen in der Rotortemperatur im Zeitverlauf ausgeglichen werden.

Es ist vorgesehen, dass eine Statortemperatur mittels mindestens eines Temperatursensors erfasst wird, wobei ausgehend von der erfassten Statortemperatur ein Strangwiderstand der elektrischen Maschine geschätzt wird, wobei ausgehend von Stromsteigungen der erfassten Strangströme Nullspannungszustände identifiziert werden, wobei ausgehend von den erfassten Stromsteigungen, bekannten Werten für die Strangspannungen während der Nullspannungszustände und des geschätzten Strangwiderstandes der Spannungsanteil der Flussverkettung bestimmt wird. Während der Nullspannungszustände ist die elektrische Maschine kurzgeschlossen. Durchlassspannungsanteile von Leistungshalbleitern eines die elektrische Maschine speisenden Pulswechselrichters sind nahezu Null und können daher vernachlässigt werden, sodass die Statorspannungen *u_{α}, u_{β}* beide Null sind. Ausgehend von den Stromsteigungen, welche insbesondere aufgrund des hochfrequenten bzw. überabgetasteten Erfassens der Strangströme mit großem Signal-zu-Rauschverhältnis erfasst werden können, ist $\frac{d}{dt} \left(\left(ΣL\left(\begin{matrix}1 & 0 \\ 0 & 1\end{matrix}\right)+ΔL\left(\begin{matrix}cos \left(2{γ}_{el}\right) & sin \left(2{γ}_{el}\right) \\ sin \left(2{γ}_{el}\right) & - cos \left(2{γ}_{el}\right)\end{matrix}\right)\right)⋅\left(\begin{matrix}{i}_{α} \\ {i}_{β}\end{matrix}\right)\right)$ ebenfalls bekannt. Da die Statortemperatur erfasst wird, kann $R ⋅ \left(\begin{matrix}{i}_{α} \\ {i}_{β}\end{matrix}\right)$ geschätzt werden und ist somit bekannt. Der Spannungsanteil der Flussverkettung lässt sich also ausgehend von den bekannten Größen bestimmen. Aus dem bestimmten Spannungsanteil wird die Flussverkettung bestimmt und hierüber, wie bereits beschrieben, die Rotortemperatur geschätzt.

In einer nicht beanspruchten Ausführungsform ist vorgesehen, dass ein hochfrequentes Testsignal bezüglich der Strangspannungen durch Modulation eines die elektrische Maschine speisenden Pulswechselrichters eingeprägt wird, wobei zum Bestimmen der Flussverkettung mittels eines Beobachters ein Spannungsanteil der Flussverkettung in einer Systemantwort der elektrischen Maschine auf das aufgeprägte hochfrequente Testsignal von einem ohmsch-induktiven Spannungsanteil in der Systemantwort separiert wird. Durch die Spannungsbildung des Pulswechselrichters wird das hochfrequente Testsignal auf die elektrische Maschine eingeprägt. Dieses hochfrequente Testsignal ist jedoch derart kurz (insbesondere etwa 1 bis 10 Pulsperioden des Pulswechselrichters) gewählt, dass eine Gegenspannung der elektrischen Maschine als nahezu konstant angenähert werden kann. Der ohmsch-induktive Spannungsanteil reagiert mit einer gleichfrequenten Systemantwort: $R ⋅ \left(\begin{matrix}{i}_{α} \\ {i}_{β}\end{matrix}\right) + \frac{d}{dt} \left(\left(ΣL\left(\begin{matrix}1 & 0 \\ 0 & 1\end{matrix}\right)+ΔL\left(\begin{matrix}cos \left(2{γ}_{el}\right) & sin \left(2{γ}_{el}\right) \\ sin \left(2{γ}_{el}\right) & - cos \left(2{γ}_{el}\right)\end{matrix}\right)\right)⋅\left(\begin{matrix}{i}_{α} \\ {i}_{β}\end{matrix}\right)\right)$ wohingegen ein Spannungsanteil des Rotors demgegenüber eine Gleichgröße ist: $\frac{d}{dt} {ψ}_{PM} \left(\begin{matrix}cos \left(2{γ}_{el}\right) \\ sin \left(2{γ}_{el}\right)\end{matrix}\right)$

Dies sei im Folgenden näher erläutert:

Der Spannungsanteil des Rotors ist durch seine Drehzahl vorgegeben, was einer mechanischen Trägheit unterliegt. Dieser Spannungsanteil kann in kurzen Zeiträumen von insbesondere etwa 1 bis 10 Pulsdauerperioden des Pulswechselrichters demnach als Gleichgröße angesehen werden. Wird nun ein hochfrequentes Testsignal bezüglich der Strangspannungen der elektrischen Maschine durch die Modulation des Pulswechselrichters eingeprägt, so zeigt der obige ohmsch-induktive Spannungsanteil eine gleichfrequente Spannungsantwort. Mit einem Beobachter, beispielsweise durch Auswerten ganzer Perioden einer Trägerfrequenz des Testsignals, lässt sich somit der Spannungsanteil der Flussverkettung in der Systemantwort der elektrischen Maschine auf das aufgeprägte hochfrequente Testsignal von dem ohmsch-induktiven Spannungsanteil in der Systemantwort separieren. Ein Beobachter ist insbesondere ein regelungstechnischer Beobachter (engl. state observer), der ausgehend von einem Modell der elektrischen Maschine einen Zustand der elektrischen Maschine schätzt. Der geschätzte Zustand der elektrischen Maschine wird mit einem Istzustand der elektrischen Maschine verglichen und bei Abweichungen wird mindestens ein Parameter des Modells so lange angepasst, bis der geschätzte Zustand und der Istzustand wieder übereinstimmen. Der angepasste Parameter ist vorliegend insbesondere die Flussverkettung *ψ_{PM}* bzw. ein zeitlicher Verlauf der Flussverkettung *ψ_{PM}*. Die Rotortemperatur der elektrischen Maschine wird dann ausgehend von der bekannten Abhängigkeit der Rotortemperatur von der Flussverkettung des Rotors geschätzt und bereitgestellt.

In einer nicht beanspruchten weiterbildenden Ausführungsform ist vorgesehen, dass die Strangströme und zeitliche Strangstromverläufe während einer Dauer von aktiven Spannungszuständen hochfrequent erfasst werden oder aus einem Verlauf der Strangströme während der Nullspannungszustände rekonstruiert werden. Die Auswertung der Strangströme während der aktiven Spannungszustände bietet sich insbesondere bei Arbeitspunkten mit hohen Modulationsgraden des Pulswechselrichters an, beispielsweise bei hohen Drehzahlen.

In einer Ausführungsform ist vorgesehen, dass ausgehend von der geschätzten Rotortemperatur eine Steuerung oder Regelung der elektrischen Maschine angepasst wird. Hierdurch kann eine Steuerung und/oder Regelung direkt auf Grundlage eines aktuellen Wertes für die Rotortemperatur angepasst werden, sodass die elektrische Maschine stets auf Grundlage von aktuellen Parameterwerten gesteuert und/oder geregelt wird.

In einer Ausführungsform ist vorgesehen, dass zum Anpassen in der Steuerung oder in der Regelung eine Maximaldauerleistung und/oder eine dynamische Überlastfähigkeit der elektrischen Maschine verändert werden. Insbesondere werden zugehörige Betriebsparameter verändert. Hierdurch kann die elektrische Maschine in Abhängigkeit eines aktuellen Wertes oder aktuellen Mittelwertes stets mit einer maximal möglichen bzw. maximal erreichbaren Maximaldauerleistung und/oder maximal möglichen dynamischen Überlastfähigkeit betrieben werden. Insbesondere können hierdurch zu jedem Zeitpunkt sowohl eine Leistungsfähigkeit als auch eine Lebensdauer verbessert werden. Anders ausgedrückt kann hierdurch eine schädliche Überlastung zu jedem Zeitpunkt vermieden werden, was zu einer Erhöhung der Lebensdauer führt.

In einer Ausführungsform ist vorgesehen, dass die Rotorlage im Rahmen einer geberlosen Regelung der elektrischen Maschine geschätzt wird. Ein Verfahren zum Schätzen einer Rotorlage und/oder einer Rotordrehzahl ist beispielsweise aus Bastian Weber, Positionsgeberlose Regelung von permanentmagneterregten Synchronmaschinen bei kleinen Drehzahlen mit überabtastender Stromerfassung, Hannover, Gottfried Wilhelm Leibniz Universität Hannover, Dissertation, 2018, 163 S., https://doi.org/10.15488/9140, bekannt.

In einer weiterbildenden Ausführungsform ist vorgesehen, dass eine Rotorlageschätzung der geberlosen Regelung deaktiviert wird, wenn eine Drehmomentanforderung an die elektrische Maschine einen Schwellenwert unterschreitet und/oder Null ist, wobei eine Rotorlage nach dem Deaktivieren aus bisher geschätzten Rotorlagen extrapoliert wird, wobei die Rotortemperatur geschätzt wird, während die Rotorlageschätzung deaktiviert ist, und wobei die Rotorlageschätzung nach dem Schätzen der Rotortemperatur wieder aktiviert wird. Hierdurch kann ein eventuell auftretender störender Einfluss der Rotorlageschätzung der geberlosen Regelung, weil beispielsweise nicht alle notwendigen Größen gleichzeitig bestimmt werden können, vermieden werden. Anders ausgedrückt wird bei sehr geringen oder verschwindenden Drehmomentanforderungen ein Aussetzbetrieb durchgeführt, während dessen die Maßnahmen zum Bestimmen der Rotortemperatur durchgeführt werden. Ist die Drehmomentanforderung an die elektrische Maschine in einem kurzen Zeitraum von etwa 4 PWM-Perioden sehr gering oder Null, so wird die Rotorlageschätzung der geberlosen Regelung kurzzeitig deaktiviert. Auf Grund der mechanischen Trägheit des Rotors der elektrischen Maschine wird angenommen, dass sich die Drehzahl im Zeitraum von etwa 4 PWM-Perioden nicht verändert, sodass die aktuelle Rotorlage aus den bekannten Werten davor extrapoliert werden kann. Mit deaktivierter geberlosen Regelung wird die Rotortemperatur geschätzt. Anschließend wird die geberlose Regelung wieder aktiviert und diese synchronisiert sich wieder auf die elektrische Maschine auf.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Insbesondere kann vorgesehen sein, dass die Steuereinrichtung zumindest teilweise als feldprogrammierbares Gatterfeld ausgebildet ist und/oder mindestens ein feldprogrammierbares Gatterfeld umfasst.

Weiterbildend kann vorgesehen sein, dass die Steuereinrichtung mindestens ein System-on-Chip umfasst.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Schätzen einer Rotortemperatur eines Rotors einer elektrischen Maschine;
- Fig. 2: eine schematische Darstellung zur Verdeutlichung einer hochfrequenten Erfassung von Strangströmen;
- Fig. 3: ein schematisches Ablaufdiagramm einer Ausführungsform des Verfahrens zum Schätzen einer Rotortemperatur eines Rotors einer elektrischen Maschine.

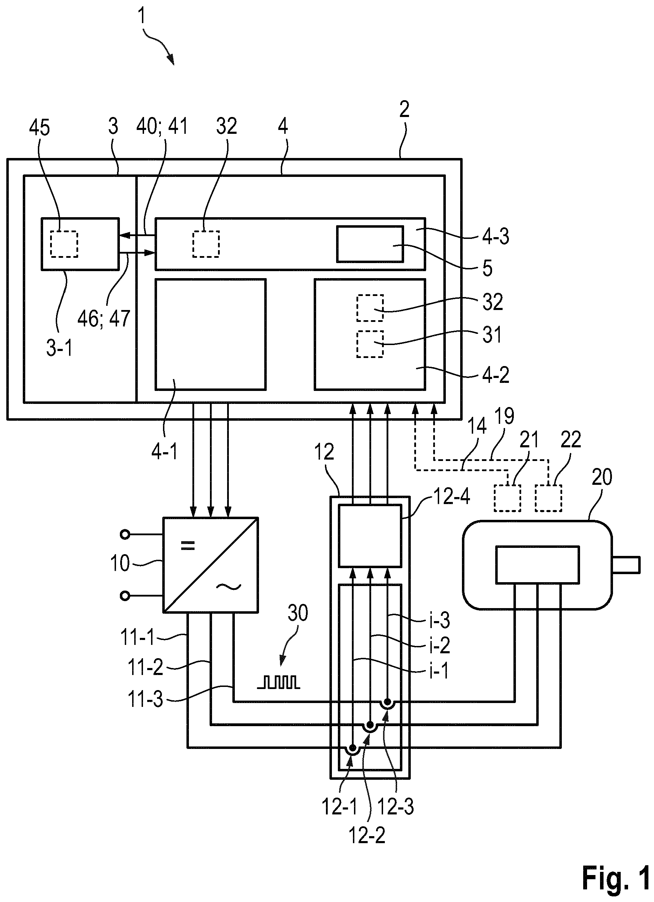

In Fig. 1 ist eine schematische Darstellung einer Ausführungsform der Vorrichtung 1 zum Bestimmen einer Rotortemperatur 40 eines Rotors einer elektrischen Maschine 20 gezeigt. Die Vorrichtung 1 umfasst eine Steuereinrichtung 2. Die Steuereinrichtung 2 umfasst in der gezeigten Ausführungsform einen Digitalen Signalprozessor 3 und ein feldprogrammierbares Gatterfeld 4. Das feldprogrammierbare Gatterfeld 4 erlaubt eine hochfrequente Signalverarbeitung und Signalauswertung. Der Digitale Signalprozessor 3 und das feldprogrammierbare Gatterfeld 4 sind insbesondere als System-on-Chip-(SoC) ausgebildet. Die Vorrichtung 1 führt das in dieser Offenbarung beschriebene Verfahren aus, welches nachfolgend anhand der Vorrichtung 1 erläutert wird.

Das feldprogrammierbare Gatterfeld 4 umfasst mehrere Module 4-x, die unterschiedliche Funktionen ausführen, wie nachfolgend erläutert wird.

Gezeigt ist ferner ein Pulswechselrichter 10, der im Beispiel als Zweipunktwechselrichter ausgebildet ist, sowie eine Sensorik 12 zum Erfassen von Strangströmen i-x, umfassend Stromsensoren 12-1, 12-2, 12-3 und einen Analog-Digital-Wandler 12-4. Die Sensorik 12 kann auch Teil der Vorrichtung 1 sein. Weiter ist eine elektrische Maschine 20 gezeigt, die von dem Pulswechselrichter 10 über drei Stränge 11-1, 11-2, 11-3 gespeist wird. Zum Speisen erzeugt der Pulswechselrichter 10 in an sich bekannter Weise ein Drehfeld und wird hierzu von einem Modul 4-1 angesteuert. Insbesondere stellt das Modul 4-1 eine Modulationssteuerung bereit.

Mittels der Sensorik 12 werden die Strangströme i-x der elektrischen Maschine 20 hochfrequent erfasst, von der Steuereinrichtung 2 empfangen und von dem Modul 4-2 verarbeitet. Insbesondere werden die Strangströme i-x überabgetastet mit einer Abtastfrequenz erfasst, die um einen Faktor 10, 100 oder sogar 1000 über einer Modulationsfrequenz des Pulswechselrichters 10 liegt. Unter Berücksichtigung einer Totzeitkompensation werden, ebenfalls mittels des Moduls 4-2, zugehörige Strangspannungen bestimmt.

Eine Rotorlage 14, d.h. ein elektrischer Rotorlagewinkel, der elektrischen Maschine 20 wird mittels eines Drehgebers 21 erfasst, von der Steuereinrichtung 2 empfangen und dem Modul 4-2 zugeführt, oder im Rahmen einer drehgeberlosen Regelung ausgehend von den erfassten Strangströmen i-x geschätzt. Das Schätzen erfolgt beispielsweise mittels des Moduls 4-2.

Ausgehend von den hochfrequent erfassten Strangströmen i-x, den bestimmten Strangspannungen und der erfassten oder geschätzten Rotorlage 14 bestimmt das Modul 4-2 einen von der Flussverkettung 32 des Rotors hervorgerufenen Spannungsanteil von Statorspannungen der elektrischen Maschine 20. Ein Wert für die Flussverkettung 32 des Rotors wird mittels des Moduls 4-2 ausgehend von dem bestimmten Spannungsanteil bestimmt. Die Rotortemperatur 40 der elektrischen Maschine 20 wird ausgehend von einer bekannten Abhängigkeit der Rotortemperatur 40 von der Flussverkettung 32 des Rotors geschätzt, beispielsweise mittels des Moduls 4-2 oder 4-3, und beispielsweise von Modul 4-3 bereitgestellt. Die geschätzte Rotortemperatur 40 wird beispielsweise als analoges oder digitales Signal, beispielsweise in Form eines digitalen Datenpakets bereitgestellt, insbesondere ausgegeben.

Es kann vorgesehen sein, dass aus mehreren Werten der geschätzten Rotortemperatur 40 eine gemittelte Rotortemperatur 41 bestimmt und bereitgestellt wird. Das Mitteln erfolgt beispielsweise mittels des Moduls 4-3.

Das Modul 4-3 stellt insbesondere eine Regelung der elektrischen Maschine 20 bereit, wobei mit den Modulen 4-1 und 4-2 zusammen die Regelschleife realisiert wird.

Es kann in einer nicht beanspruchten Ausführungsform vorgesehen sein, dass eine Statortemperatur 19 mittels eines Temperatursensors 22 erfasst wird, wobei ausgehend von der erfassten Statortemperatur 19 ein Strangwiderstand 31 der elektrischen Maschine 20 geschätzt wird, wobei zum Bestimmen der Flussverkettung 32 die Flussverkettung 32 unter Berücksichtigung des geschätzten Strangwiderstands 31 mittels eines Beobachters 5 geschätzt wird. Der Beobachter 5 wird mittels des Moduls 4-3 bereitgestellt.

Es ist vorgesehen, dass die Statortemperatur 19 mittels der Temperatursensors 22 erfasst wird, wobei ausgehend von der erfassten Statortemperatur 19 ein Strangwiderstand 31 der elektrischen Maschine 20 geschätzt wird, wobei ausgehend von Stromsteigungen der erfassten Strangströme i-x Nullspannungszustände identifiziert werden, wobei ausgehend von den erfassten Stromsteigungen, bekannten Werten für die Strangspannungen während der Nullspannungszustände und des geschätzten Strangwiderstandes 31 der Spannungsanteil der Flussverkettung 32 bestimmt wird.

Es kann weiter alternativ in einer nicht beanspruchten Ausführungsform vorgesehen sein, dass ein hochfrequentes Testsignal 30 bezüglich der Strangspannungen durch Modulation des die elektrische Maschine 20 speisenden Pulswechselrichters 10 eingeprägt wird, wobei zum Bestimmen der Flussverkettung 32 mittels eines Beobachters 5 ein Spannungsanteil der Flussverkettung 32 in einer Systemantwort der elektrischen Maschine 20 auf das aufgeprägte hochfrequente Testsignal 30 von einem ohmsch-induktiven Spannungsanteil in der Systemantwort separiert wird. Mittels des Moduls 4-1 wird der Pulswechselrichter 10 hierzu derart angesteuert, dass dieser ein hochfrequentes Testsignal 30 bezüglich der Strangspannungen durch Modulation erzeugt und eingeprägt. Hierzu wird der Pulswechselrichter 10 mittels des Moduls 4-1 derart angesteuert, dass eine hochfrequente Schwingung, insbesondere im Bereich von 3 bis 5 kHz oder darüber, beispielsweise mit einer Amplitude von 10 V, in die d-Achse eingeprägt wird. Hierdurch werden alle drei Stränge 11-x angeregt.

Es kann weiterbildend in der nicht beanspruchten Ausführungsform vorgesehen sein, dass die Strangströme i-x und zeitliche Strangstromverläufe während einer Dauer von aktiven Spannungszuständen hochfrequent erfasst werden oder aus einem Verlauf der Strangströme i-x während der Nullspannungszustände rekonstruiert werden.

Es kann vorgesehen sein, dass ausgehend von der geschätzten Rotortemperatur 40 eine Steuerung oder Regelung der elektrischen Maschine 20 angepasst wird. Hierzu werden zugehörige Parameter der Steuerung oder Regelung verändert. Die Parameter können hierbei beispielsweise ausgehend von einer in der Steuereinrichtung 2 hinterlegten Kennlinie 45 angepasst werden, in der Werte für die (gemittelte) Rotortemperatur 40 (41) mit den jeweiligen Werten für die Parameter der Steuerung oder Regelung verknüpft sind.

Es kann insbesondere vorgesehen sein, dass zum Anpassen in der Steuerung oder in der Regelung eine Maximaldauerleistung 46 und/oder eine dynamische Überlastfähigkeit 47 der elektrischen Maschine 20 verändert werden. Dies erfolgt beispielsweise ebenfalls ausgehend von Motorkennlinien (nicht gezeigt) der elektrischen Maschine 20, die Werte der Rotortemperatur 40 mit Werten für die Maximaldauerleistung 46 und/oder die dynamische Überlastfähigkeit 47 verknüpfen. Das Verändern wird beispielsweise im Modul 3-1 des Digitalen Signalprozessors 3 durchgeführt. Die veränderten Werte für die Maximaldauerleistung 46 und/oder die dynamische Überlastfähigkeit 47 werden dem Modul 4-3 zugeführt, welches die elektrische Maschine 20 steuert oder regelt. Das Modul 4-3 passt die Steuerung oder Regelung entsprechend an. Insbesondere wird ein Betriebsparameterbereich der elektrischen Maschine 20 gemäß den geänderten Begrenzungen anpasst.

Es kann beim Schätzen der Rotorlage 14 im Rahmen der geberlosen Regelung vorgesehen sein, dass eine Rotorlageschätzung der geberlosen Regelung deaktiviert wird, wenn eine Drehmomentanforderung an die elektrische Maschine 20 einen Schwellenwert unterschreitet und/oder Null ist, wobei eine Rotorlage 14 nach dem Deaktivieren aus bisher geschätzten Rotorlagen 14 extrapoliert wird, wobei die Rotortemperatur 40 bestimmt wird, während die Rotorlageschätzung deaktiviert ist, und wobei die Rotorlageschätzung nach dem Bestimmen der Rotortemperatur 40 wieder aktiviert wird.

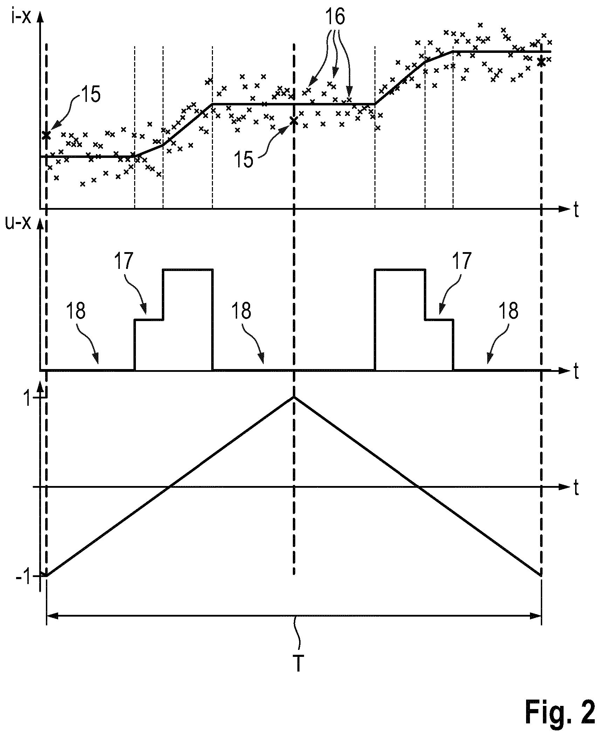

In Fig. 2 ist eine schematische Darstellung zur Verdeutlichung einer hochfrequenten Erfassung von Strangströmen i-x gezeigt. Hierbei sind untereinander beispielhafte zeitliche Verläufe eines Strangstroms i-x, einer Strangspannung u-x und eines Trägersignals einer Pulsweitenmodulation eines Pulswechselrichters über die Zeit t gezeigt, jeweils über eine vollständige Modulationsperiode T des Pulswechselrichters. Hierbei sind sowohl aktive Spannungszustände 17 als auch Nullspannungszustände 18 gezeigt.

Bei der üblicherweise verwendeten mittensynchronen Abtastung werden pro Periode zwei Messwerte 15 des Strangstromes i-x erfasst, nämlich am Angang und in der Mitte der Modulationsperiode T. Beim hochfrequenten Erfassen des Strangstromes i-x werden hingegen pro Modulationsperiode T deutlich mehr Messwerte 16 erfasst (der Übersichtlichkeit halber sind nur ein paar mit einem eigenen Bezugszeichen versehen), insbesondere erfolgt eine Überabtastung, das heißt, eine Abtastfrequenz ist insbesondere um einen Faktor 10, 100 oder sogar 1000 größer als die Modulationsfrequenz des Pulswechselrichters. Daher steht pro Modulationsperiode T ein Vielfaches an Messwerten 16 für den Strangstrom i-x zur Verfügung, was sich positiv auf ein Signal-zu-Rauschverhältnis auswirkt und darüber hinaus eine Mittelwertbildung und/oder Filterung ermöglicht. Ferner stehen über die gesamte Modulationsperiode T stets zeitaktuelle Messwerte 16 zur Verfügung. Insbesondere können auch Stromsteigungen verbessert bestimmt werden.

Durch das hochfrequente Erfassen der Strangströme i-x ist es insbesondere möglich, eine Totzeitkompensation durchzuführen, sodass die realen aktuellen Strangspannungen u-x, die zu den jeweiligen Strangströmen gehören, bestimmt werden können.

Ferner ermöglicht das hochfrequente Erfassen insbesondere, dass ein Strangstrom i-x und ein zeitlicher Strangstromverlauf gezielt während einer Dauer von aktiven Spannungszuständen 17 hochfrequent erfasst werden kann.

Weiter ermöglicht das hochfrequente Erfassen insbesondere, dass alternativ ein Strangstrom i-x während der Nullspannungszustände 18 erfasst werden kann und ein Verlauf des Strangstromes i-x während der aktiven Spannungszustände 17 aus dem während der Nullspannungszustände 18 erfassten Strangstrom i-x durch Schätzen rekonstruiert werden kann. Im einfachsten Fall werden die Werte während der aktiven Spannungszustände 17 ausgehend von den Werten vor und nach den aktiven Spannungszuständen 17 interpoliert.

In einer Ausführungsform des Verfahrens und der Vorrichtung ist vorgesehen, dass die Strangströme i-x und zeitliche Strangstromverläufe während einer Dauer der aktiven Spannungszustände 17 hochfrequent erfasst werden oder aus einem Verlauf der Strangströme während der Nullspannungszustände 18 rekonstruiert werden.

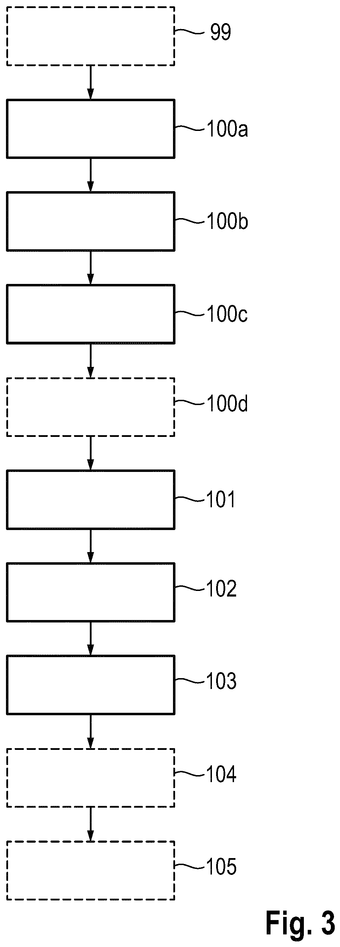

In Fig. 3 ist ein schematisches Ablaufdiagramm einer Ausführungsform des Verfahrens zum Schätzen einer Rotortemperatur eines Rotors einer elektrischen Maschine gezeigt.

In einer Maßnahme 100a werden Strangströme der elektrischen Maschine hochfrequent erfasst. Dies erfolgt insbesondere überabgetastet mit einer Abtastfrequenz, die um einen Faktor 10, 100 oder 1000 größer ist als eine Modulationsfrequenz eines Pulswechselrichters, der die elektrische Maschine speist.

In einer Maßnahme 100b werden unter Berücksichtigung einer Totzeitkompensation zugehörige Strangspannungen bestimmt. Insbesondere wird zu jedem Zeitpunkt, zu dem ein Wert für einen Strangstrom erfasst wird, eine zugehörige Strangspannung bestimmt. Dies erfolgt insbesondere ausgehend von den erfassten Strangströmen und einer Modulation des Pulswechselrichters.

In Maßnahme 100c wird eine Rotorlage der elektrischen Maschine erfasst oder geschätzt. Dies kann mittels einer hierfür eingerichteten Sensorik, beispielsweise mittels eines Drehgebers, erfolgen oder im Rahmen einer drehgeberlosen Regelung, bei der die Rotorlage geschätzt wird.

Die Maßnahmen 100a bis 100c werden insbesondere fortlaufend wiederholt und insbesondere zeitgleich ausgeführt, sodass stets aktuelle Werte für die Strangströme, die Strangspannungen und die Rotorlage zur Verfügung stehen.

In Maßnahme 101 wird ausgehend von den hochfrequent erfassten Strangströmen, den bestimmten Strangspannungen und der erfassten oder geschätzten Rotorlage ein von der Flussverkettung des Rotors hervorgerufener Spannungsanteil von Statorspannungen bestimmt.

In Maßnahme 102 wird die Flussverkettung des Rotors ausgehend von dem in Maßnahme 101 bestimmten Spannungsanteil bestimmt.

In Maßnahme 103 wird die Rotortemperatur der elektrischen Maschine ausgehend von einer bekannten Abhängigkeit der Rotortemperatur von der Flussverkettung des Rotors geschätzt und bereitgestellt. Die geschätzte Rotortemperatur kann beispielsweise als analoges oder digitales Rotortemperatursignal bereitgestellt, insbesondere ausgegeben, werden.

Es kann in einer nicht beanspruchten Ausführungsform vorgesehen sein, dass in einer Maßnahme 100d eine Statortemperatur mittels mindestens eines Temperatursensors erfasst wird. In Maßnahme 101 ist dann vorgesehen, dass ausgehend von der erfassten Statortemperatur ein Strangwiderstand der elektrischen Maschine geschätzt wird, wobei in Maßnahme 102 zum Bestimmen der Flussverkettung die Flussverkettung unter Berücksichtigung des geschätzten Strangwiderstands mittels eines Beobachters geschätzt wird.

Es ist vorgesehen, dass in einer Maßnahme 100d eine Statortemperatur mittels mindestens eines Temperatursensors erfasst wird. In Maßnahme 101 ist dann vorgesehen, dass ausgehend von der erfassten Statortemperatur ein Strangwiderstand der elektrischen Maschine geschätzt wird, wobei in Maßnahme 102 ausgehend von Stromsteigungen der erfassten Strangströme Nullspannungszustände identifiziert werden, wobei ausgehend von den erfassten Stromsteigungen, bekannten Werten für die Strangspannungen während der Nullspannungszustände und des geschätzten Strangwiderstandes der Spannungsanteil der Flussverkettung bestimmt wird.

Es kann alternativ in einer nicht beanspruchten Ausführungsform auch vorgesehen sein, dass in Maßnahme 101 ein hochfrequentes Testsignal bezüglich der Strangspannungen durch Modulation eines die elektrische Maschine speisenden Pulswechselrichters eingeprägt wird. In Maßnahme 102 wird dann zum Bestimmen der Flussverkettung mittels eines Beobachters ein Spannungsanteil der Flussverkettung in einer Systemantwort der elektrischen Maschine auf das aufgeprägte hochfrequente Testsignal von einem ohmsch-induktiven Spannungsanteil in der Systemantwort separiert.

Es kann die nicht beanspruchte Ausführungsform weiterbildend vorgesehen sein, dass die Strangströme und zeitliche Strangstromverläufe während einer Dauer von aktiven Spannungszuständen hochfrequent erfasst werden oder aus einem Verlauf der Strangströme während der Nullspannungszustände rekonstruiert werden.

Es kann in einer Maßnahme 104 vorgesehen sein, dass ausgehend von der geschätzten Rotortemperatur eine Steuerung oder Regelung der elektrischen Maschine angepasst wird.

Weiterbildend kann in Maßnahme 104 vorgesehen sein, dass zum Anpassen in der Steuerung oder in der Regelung eine Maximaldauerleistung und/oder eine dynamische Überlastfähigkeit der elektrischen Maschine verändert werden.

Es kann vorgesehen sein, dass eine Rotorlageschätzung der geberlosen Regelung in einer Maßnahme 99 deaktiviert wird, wenn eine Drehmomentanforderung an die elektrische Maschine einen Schwellenwert unterschreitet und/oder Null ist, wobei eine Rotorlage nach dem Deaktivieren in Maßnahme 100c aus bisher geschätzten Rotorlagen extrapoliert wird, wobei die Rotortemperatur mittels der Maßnahmen 100a bis 103 geschätzt wird, während die Rotorlageschätzung deaktiviert ist, und wobei die Rotorlageschätzung nach dem Schätzen der Rotortemperatur in einer Maßnahme 105 wieder aktiviert wird.

### Bezugszeichenliste

| | | | |
|---|---|---|---|
| 1 | Vorrichtung | 18 | Nullspannungszustand |
| 2 | Steuereinrichtung | 19 | Statortemperatur |
| 3 | Digitaler Signalprozessor | 20 | elektrische Maschine |
| 4 | feldprogrammierbares Gatterfeld | 21 | Drehgeber |
| | | 22 | Temperatursensor |
| 4-x | Modul | 30 | hochfrequentes Testsignal |
| 5 | Beobachter | 31 | Strangwiderstand |
| 10 | Pulswechselrichter | 32 | Flussverkettung |
| 11-x | Strang | 40 | Rotortemperatur |
| 12 | Sensorik | 41 | gemittelte Rotortemperatur |
| 12-1 | Stromsensor | 45 | Kennlinie |
| 12-1 | Stromsensor | 46 | Maximaldauerleistung |
| 12-1 | Stromsensor | 47 | dynamische Überlastfähigkeit |
| 12-4 | Digital-Analog-Wandler | 99-105 | Maßnahme |
| 14 | Rotorlage | i-x | Strangstrom |
| 15 | Messwert | u-x | Strangspannung |
| 16 | Messwert | t | Zeit |
| 17 | aktiver Spannungszustand | T | Modulationsperiode |

## Patentansprüche

1. Verfahren zum Schätzen einer Rotortemperatur (40) eines Rotors einer elektrischen Maschine (20),
wobei Strangströme (i-x) der elektrischen Maschine (20) hochfrequent, das heißt überabgetastet, erfasst werden,
wobei unter Berücksichtigung einer Totzeitkompensation zugehörige Strangspannungen (u-x) bestimmt werden,
wobei eine Rotorlage (14) der elektrischen Maschine (20) erfasst oder geschätzt wird, wobei ausgehend von den hochfrequent erfassten Strangströmen (i-x), den bestimmten Strangspannungen (u-x) und der erfassten oder geschätzten Rotorlage (14) ein von der Flussverkettung (32) des Rotors hervorgerufener Spannungsanteil von Statorspannungen bestimmt wird,
wobei die Flussverkettung (32) des Rotors ausgehend von dem bestimmten Spannungsanteil bestimmt wird, und
wobei die Rotortemperatur (40) der elektrischen Maschine (20) ausgehend von einer bekannten Abhängigkeit der Rotortemperatur (40) von der Flussverkettung (32) des Rotors geschätzt und bereitgestellt wird,
wobei eine Statortemperatur (19) mittels mindestens eines Temperatursensors (22) erfasst wird, wobei ausgehend von der erfassten Statortemperatur (19) ein Strangwiderstand (31) der elektrischen Maschine (20) geschätzt wird, wobei ausgehend von Stromsteigungen der erfassten Strangströme (i-x) Nullspannungszustände (18) identifiziert werden, wobei ausgehend von den erfassten Stromsteigungen, bekannten Werten für die Strangspannungen (u-x) während der Nullspannungszustände und des geschätzten Strangwiderstandes (31) der Spannungsanteil der Flussverkettung (32) bestimmt wird.

2. Verfahren nach einem der vorangegangenen Ansprüche, **dadurch gekennzeichnet, dass** ausgehend von der geschätzten Rotortemperatur (40) eine Steuerung oder Regelung der elektrischen Maschine (20) angepasst wird.

3. Verfahren nach Anspruch 2, **dadurch gekennzeichnet, dass** zum Anpassen in der Steuerung oder in der Regelung eine Maximaldauerleistung und/oder eine dynamische Überlastfähigkeit der elektrischen Maschine (20) verändert werden.

4. Verfahren nach einem der vorangegangenen Ansprüche, **dadurch gekennzeichnet, dass** die Rotorlage (14) im Rahmen einer geberlosen Regelung der elektrischen Maschine (20) geschätzt wird.

5. Verfahren nach Anspruch 4, **dadurch gekennzeichnet, dass** eine Rotorlageschätzung der geberlosen Regelung deaktiviert wird, wenn eine Drehmomentanforderung an die elektrische Maschine (20) einen Schwellenwert unterschreitet und/oder Null ist, wobei eine Rotorlage (14) nach dem Deaktivieren aus bisher geschätzten Rotorlagen (14) extrapoliert wird, wobei die Rotortemperatur (40) geschätzt wird, während die Rotorlageschätzung deaktiviert ist, und wobei die Rotorlageschätzung nach dem Schätzen der Rotortemperatur (40) wieder aktiviert wird.

6. Vorrichtung (1) zum Schätzen einer Rotortemperatur (40) eines Rotors einer elektrischen Maschine (20), umfassend:
mindestens einen Temperatursensor (22), eingerichtet zum Erfassen einer Statortemperatur (19), und
eine Steuereinrichtung (2), wobei die Steuereinrichtung (2) dazu eingerichtet ist, hochfrequent, das heißt überabgetastet, erfasste Strangströme (i-x) zu empfangen,
unter Berücksichtigung einer Totzeitkompensation zugehörige Strangspannungen (u-x) zu bestimmen,
eine erfasste oder geschätzte Rotorlage (14) der elektrischen Maschine (20) zu empfangen,
ausgehend von den hochfrequent erfassten Strangströmen (i-x), den bestimmten Strangspannungen (u-x) und der erfassten oder geschätzten Rotorlage (14) einen von der Flussverkettung (32) des Rotors hervorgerufenen Spannungsanteil von Statorspannungen zu bestimmen,
die Flussverkettung (32) des Rotors ausgehend von dem bestimmten Spannungsanteil zu bestimmen, und
die Rotortemperatur (40) der elektrischen Maschine (20) ausgehend von einer bekannten Abhängigkeit der Rotortemperatur (40) von der Flussverkettung (32) des Rotors zu schätzen und bereitzustellen, und
ausgehend von der erfassten Statortemperatur (19) einen Strangwiderstand (31) der elektrischen Maschine (20) zu schätzen, ausgehend von Stromsteigungen der erfassten Strangströme (i-x) Nullspannungszustände (18) zu identifizieren, und
ausgehend von den erfassten Stromsteigungen, bekannten Werten für die Strangspannungen (u-x) während der Nullspannungszustände und des geschätzten Strangwiderstandes (31) den Spannungsanteil der Flussverkettung (32) zu bestimmen.

## Claims

1. Method for estimating a rotor temperature (40) of a rotor of an electric machine (20),
wherein phase currents (i-x) of the electric machine (20) are detected at high frequency, i.e. on an oversampled basis,
wherein associated phase voltages (u-x) are determined taking dead-time compensation into account,
wherein a rotor position (14) of the electric machine (20) is detected or estimated,
wherein a voltage component of stator voltages caused by the flux linkage (32) of the rotor is determined on the basis of the phase currents (i-x) detected at high frequency, the determined phase voltages (u-x) and the detected or estimated rotor position (14),
wherein the flux linkage (32) of the rotor is determined on the basis of the determined voltage component, and
wherein the rotor temperature (40) of the electric machine (20) is estimated and provided on the basis of a known dependence of the rotor temperature (40) on the flux linkage (32) of the rotor,
wherein a stator temperature (19) is detected by means of at least one temperature sensor (22), wherein a phase resistance (31) of the electric machine (20) is estimated on the basis of the detected stator temperature (19), wherein zero-voltage states (18) are identified on the basis of current increases of the detected phase currents (i-x), wherein the voltage component of the flux linkage (32) is determined on the basis of the detected current increases, known values for the phase voltages (u-x) during the zero-voltage states and the estimated phase resistance (31).

2. Method according to any of the preceding claims, **characterized in that** open-loop or closed-loop control of the electric machine (20) is adjusted on the basis of the estimated rotor temperature (40).

3. Method according to claim 2, **characterized in that** a maximum continuous power and/or a dynamic overload capacity of the electric machine (20) are changed for adjustment in the open-loop or closed-loop control.

4. Method according to any of the preceding claims, **characterized in that** the rotor position (14) is estimated within the context of sensorless closed-loop control of the electric machine (20).

5. Method according to claim 4, **characterized in that** rotor position estimation of the sensorless closed-loop control is deactivated when a torque request to the electric machine (20) does not meet a threshold value and/or is zero, a rotor position (14) being extrapolated from previously estimated rotor positions (14) after deactivation, the rotor temperature (40) being estimated while the rotor position estimation is deactivated, and the rotor position estimation being reactivated after the rotor temperature (40) has been estimated.

6. Device (1) for estimating a rotor temperature (40) of a rotor of an electric machine (20), comprising:
at least one temperature sensor (22), designed to detect a stator temperature (19), and
a control apparatus (2), wherein the control apparatus (2) is designed to receive phase currents (i-x) detected at high frequency, i.e. on an oversampled basis, to determine associated phase voltages (u-x) taking dead-time compensation into account,
to receive a detected or estimated rotor position (14) of the electric machine (20),
to determine a voltage component of stator voltages caused by the flux linkage (32) of the rotor on the basis of the phase currents (i-x) detected at high frequency, the determined phase voltages (u-x) and the detected or estimated rotor position (14),
to determine the flux linkage (32) of the rotor on the basis of the determined voltage component, and
to estimate and provide the rotor temperature (40) of the electric machine (20) on the basis of a known dependence of the rotor temperature (40) on the flux linkage (32) of the rotor, and
to estimate a phase resistance (31) of the electric machine (20) on the basis of the detected stator temperature (19), to identify zero-voltage states (18) on the basis of current increases in the detected phase currents (i-x), and
to determine the voltage component of the flux linkage (32) on the basis of the detected current increases, known values for the phase voltages (u-x) during the zero-voltage states and the estimated phase resistance (31).

## Revendications

1. Procédé permettant l'estimation d'une température de rotor (40) d'un rotor d'une machine électrique (20),
dans lequel des courants de phase (i-x) de la machine électrique (20) sont détectés à une fréquence élevée, c'est-à-dire par suréchantillonnage,
dans lequel des tensions de phase (u-x) associées sont déterminées en tenant compte d'une compensation du temps mort,
dans lequel une position de rotor (14) de la machine électrique (20) est détectée ou estimée,
dans lequel, à partir des courants de phase (i-x) détectés à une fréquence élevée, des tensions de phase (u-x) déterminées et de la position de rotor (14) détectée ou estimée, une composante de tension de tensions de stator provoquée par l'enchaînement de flux (32) du rotor est déterminée,
dans lequel l'enchaînement de flux (32) du rotor est déterminé à partir de la composante de tension déterminée, et
dans lequel la température de rotor (40) de la machine électrique (20) est estimée et fournie à partir d'une relation connue entre la température de rotor (40) et l'enchaînement de flux (32) du rotor,
dans lequel une température de stator (19) est détectée à l'aide d'au moins un capteur de température (22), dans lequel une résistance de phase (31) de la machine électrique (20) est estimée à partir de la température de stator (19) détectée, dans lequel des états de tension nulle (18) sont identifiés à partir de pentes de courant des courants de phase (i-x) détectés, dans lequel la composante de tension de l'enchaînement de flux (32) est déterminée à partir des pentes de courants détectées, de valeurs connues pour les tensions de phase (u-x) pendant les états de tension nulle et de la résistance de phase (31) estimée.

2. Procédé selon l'une des revendications précédentes,
**caractérisé en ce qu'une** commande ou une régulation de la machine électrique (20) est adaptée à partir de la température de rotor (40) estimée.

3. Procédé selon la revendication 2, **caractérisé en ce que,** pour l'adaptation dans la commande ou dans la régulation, une puissance continue maximale et/ou une capacité de surcharge dynamique de la machine électrique (20) sont modifiées.

4. Procédé selon l'une des revendications précédentes,
**caractérisé en ce que** la position de rotor (14) est estimée dans le cadre d'une régulation sans codeur de la machine électrique (20).

5. Procédé selon la revendication 4, **caractérisé en ce qu'**une estimation de position de rotor de la régulation sans codeur est désactivée lorsqu'une demande de couple à la machine électrique (20) est inférieure à une valeur seuil et/ou est nulle, dans lequel une position de rotor (14) est extrapolée après la désactivation à partir de positions de rotor (14) estimées jusqu'à présent, dans lequel la température de rotor (40) est estimée pendant que l'estimation de position de rotor est désactivée, et dans lequel l'estimation de position de rotor est réactivée après l'estimation de la température de rotor (40).

6. Dispositif (1) permettant l'estimation d'une température de rotor (40) d'un rotor d'une machine électrique (20), comprenant :
au moins un capteur de température (22), configuré pour détecter une température de stator (19), et
un appareil de commande (2), dans lequel l'appareil de commande (2) est configuré pour recevoir des courants de phase (i-x) détectés à une fréquence élevée, c'est-à-dire par suréchantillonnage, déterminer des tensions de phase (u-x) associées en tenant compte d'une compensation du temps mort,
recevoir une position de rotor (14) détectée ou estimée de la machine électrique (20),
à partir des courants de phase (i-x) détectés à une fréquence élevée, des tensions de phase (u-x) déterminées et de la position de rotor (14) détectée ou estimée, déterminer une composante de tension de tensions de stator provoquée par l'enchaînement de flux (32) du rotor,
déterminer l'enchaînement de flux (32) du rotor à partir de la composante de tension déterminée, et
estimer et fournir la température de rotor (40) de la machine électrique (20) à partir d'une relation connue entre la température de rotor (40) et l'enchaînement de flux (32) du rotor, et
estimer une résistance de phase (31) de la machine électrique (20) à partir de la température de stator (19) détectée, identifier des états de tension nulle (18) à partir de pentes de courant des courants de phase (i-x) détectés, et
déterminer la composante de tension de l'enchaînement de flux (32) à partir des pentes de courant détectées, de valeurs connues pour les tensions de phase (u-x) pendant les états de tension nulle et de la résistance de phase (31) estimée.
